# EUROPEAN PATENT APPLICATION

(11) **EP 1 091 528 A2**
(43) Date of publication of application: **11.04.2001**
(21) Application number: 00308483.7
(22) Date of filing: 27.09.2000
(51) Int. Cl.: H04L 12/56

(54) **Systems and methods for mapping quality of service across communications systems**

(30) Priority: 28.09.1999 US 156443 P
(71) Applicant: AT&T Corp., New York, NY 10013-2412 (US)
(72) Inventor: Roy, Radhika R., Howell, New Jersey 07731 (US)
(74) Representative: Suckling, Andrew Michael

(57) **Abstract**

A communication method and apparatus for requesting and satisfying quality of service (QOS) that is independent of a transport/network/link layer. The end-to-end system may contain one or more diverse packet-based networks (e.g., IP, ATM) where each network may have its own different QOS classes or criteria. The method and apparatus map the QOS between the application/middleware and transport/network/link layer where the application/middleware QOS that is being requested by the end user remains the same on end-to-end basis. Such mapping will allow a transport independent application to offer the end-to-end application layer QOS across all networks regardless of the types of networks that make up a communication path between end terminals. In other words, the application/middleware layer QOS will be available across all networks, regardless of whether the end-user's terminals are connected to the same network or different network types.

## Description

This non-provisional application claims the benefit of U.S. Provisional Application No. 60/156,443 entitled "Framework for Mapping of H.323 QOS over Packet-Based Network" which was filed on September 28, 1999 and is hereby incorporated by reference in its entirety. The Applicant of the provisional application is Radhika R. Roy (Attorney Docket No. 1999-0584)

### BACKGROUND OF THE INVENTION

### 1. Field of Invention

This invention relates to communication systems.

### 2. Description of Related Art

Currently, multimedia standards, such as International Telecommunications Union (ITU) H.323 conferencing services standard, facilitate multimedia communication services over packet-based networks, such as Internet Protocol (IP), asynchronous transfer mode (ATM) networks, frame relay networks, and the like. While the multimedia standard at an application layer can be well established between terminals using the same or similar communication protocols, other layers of the communication system are not as standardized. For example, the underlying architectural assumptions of the multimedia standards are extremely flexible and do not specify universal quality of service (QOS) parameters for the transport/network/link layer (OSI Layer 4/3/2). Because it is important for the layers of a network to be able to communicate with each other in a standardized manner, in current systems, when QOS parameters for the transport(network/link layer change, the QOS parameters for the application/middleware layer (OSI Layer 7/6) must also be changed. Of course, having to change or reconfigure the application/middleware layer every time the transport/network/link layer changes can be a very costly and time consuming event

Accordingly, there is a need for new technology for specifying a QOS that is independent of a transport/network/link layer.

### SUMMARY OF THE INVENTION

This invention provides a method and apparatus for mapping of the quality of service (QOS) between the application/middleware and transport/network/link layer where the application/middleware QOS that is being requested by the end user remains the same on end-to-end basis. The transport/network/link layer QOS may vary to satisfy its own resources and many QOS criteria (e.g., IP/ATM network) have been defined to satisfy the needs of its own layer without maintaining any direct relationship with the upper application/middleware QOS. This invention relates the application/middleware QOS as a common basis that can be used on an end-to-end basis by all transport/network/link layer QOS.

### BRIEF DESCRIPTION OF THE DRAWINGS

The invention is described in detail with regard to the following figures, in which like elements are referred to with like numerals, and in which:
Fig. 1 is an exemplary block diagram of a quality of service (QOS) system in accordance with the present invention;
Fig. 2 is an exemplary logical view of the protocol architecture in OSI terminology applicable to the present invention;
Fig. 3 is an exemplary block diagram of the QOS mapping entity of Fig. 1;
Fig. 4 is an exemplary block diagram of an alternative QOS system architecture for mapping in accordance with the present invention;
Fig. 5 is an exemplary block diagram of an embodiment of the QOS system in accordance with the present invention;
Fig. 6 is an exemplary data structure of the logical QOS mapping entity of Fig. 4; and
Fig. 7 is a flowchart outlining an exemplary process for mapping a QOS between application/middleware and transport/network/link layers in accordance with the present invention.

### DETAILED DESCRIPTION OF PREFERRED EMBODIMENTS

The present invention provides a technique for mapping various levels of quality of service (QOS) between application/middleware and transport/network/link layers. The end-to-end system may contain one or more diverse packet-based networks (e.g., IP, ATM) where each network may have its own different QOS classes or criteria. Such mapping will allow a transport independent application to offer the end-to-end application layer QOS across all networks regardless of the types of networks that make up a communication path between end terminals. In other words, the application/middleware layer QOS will be available across all networks, regardless of whether the end-user's terminals are connected to the same network or different network types.

Generally, the application/middleware software has only a finite set of QOS classes to meet the requirements of audio, video, and/or data that can be requested by an end-user. Further, this finite set of QOS classes remains relatively stable because these QOS classes are based on the fundamental traffic characteristics of audio, video, and data that are being used by the application/middleware. For example, in a H.323 protocol there exists only a finite set of QOS classes that can be selected by an end user to meet the requirements of audio, video, and/or data, such as guaranteed services class, controlled services class and unspecified services class where each class will have a certain set of performance parameters.

On the contrary, the transport/network/link layer can have definitions of QOS that vary widely, not only from network to network type, but also one network may have different QOS classes from its own resource management point of view and can constantly be changing to control its own resources. The parameters of the transport/network/link layer QOS may not always equate to that of the application/middleware layer QOS. There is no unique relationship or one-to-one mapping between the application/middleware and transport/network/link layer QOS. However, it important to note that it is the application/middleware QOS that is requested by the end user that needs to be satisfied on end-to-end basis, by all networks that are traversed along the source-destination path. For example, an IP network A may be providing QOS utilizing Resource Reservation Protocol (RSVP), which is a router-to-router protocol in which one router requests that another router set aside, or reserve, a certain bandwidth for a specific transmission. With RSVP, parameters such as peak rate, delay and delay variation are used to provide QOS over the IP network. Again, an IP network B may employ differentiated services (DiffServ) using the differentiated services code points (DSCP) based on per hop behavior (PHB) where peak rate, delay and delay variation will be characterized with a combination of DSCP and PHB. In another situation, an IP network C may use the multi-protocol label switching (MPLS) where different service type is used to characterize the QOS based on different performance parameters (e.g., peak rate, delay and delay variation). In another example, an ATM link layer network D may be providing QOS based on ATM QOS classes, utilizing parameters such as peak cell rate, minimum cell rate and cell loss rate to deliver information over virtual circuits, and to predict throughput and bandwidth requirements.

Accordingly, a standardized QOS mapping mechanism between the application/middleware and transport/network/link layers should available to satisfy the need by the end-user for a standardized application/middleware QOS, and this standardized application/ndddleware QOS should remain the same on end-to-end basis although the different transport/network/link layer QOS. Furthermore, it may be used over a single or multiple networks where each transport/network/link layer may employ different QOS mechanisms.

The present invention provides a framework of how the application/middleware layer QOS classes can be mapped over the diverse transport/network/link layer QOS defined by packet-based networks, such as IP and ATM. An application like H.323 can be thought as a part of application (OSI Layer 7) or middleware layer (OSI Layer 6) depending on the interpretation or view point. In the present invention, the QOS of this layer is defined as the application/middleware layer QOS. It may be noted that the transport layer usually deals with TCP or UDP protocol, and the abstraction of QOS is not directly applicable. In other words, the transport layer can be thought of transparent to the application/middleware or network/link layer. However, the network layer (OSI Layer 3) that deals with IP has many QOS signaling protocols such as RSVP, DiffServ, and MPLS. On the contrary, the ATM network is dealing with QOS signaling protocols in the link layer (OSI Layer 2) and there are many QOS classes such as constant bit rate (CBR), real-time variable bit rate (rt-VBR), non-real-time variable bit rate (nrt-VBR), available bit rate (ABR), and unspecified bit rate (UBR).

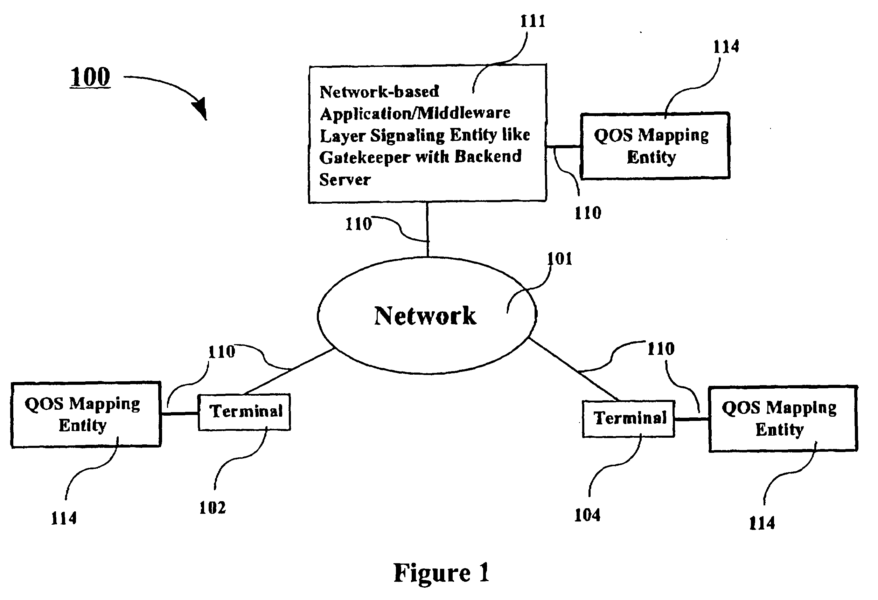

Fig. 1 is an exemplary block diagram of a quality of service (QOS) system 100 according to the present invention. As shown in Fig. 1, the system 100 include terminals 102 and 104 coupled to a network 101 through communication links 110 along with the network-based application/middleware signaling entity like gatekeeper with backend server 111. QOS mapping entities 114 are also associated with each device (e.g., terminal, application/middleware layer entity). The physical realization of the QOS mapping entity will depend on the implementation in a particular system. For example, it can be realized using either a software or hardware device, but can also be built so it is dedicated to a mapping function only.

The terminals 102 and 104 can be devices of any type that allow for the transmission and/or reception of communication signals. For example, the terminals 102 and 104 can be land-line telephones, cellular telephones, computers, H.323 terminals, personal digital assistants, video telephones, video conference apparatuses, smart or computer assisted televisions, Web TV and the like. For the purposes of the following description of the present invention, it will be assumed that terminals 102 and 104 are personal computers.

Terminals 102 and 104 along with their QOS mapping entities 114 are in communication with network 101 through communication links 110. These communication links 110 may be any type of connection that allows for the transmission of information. Some examples include conventional telephone lines, digital transmission facilities, fiber optic lines, direct serial/parallel connections, cellular telephone connections, satellite communication links, radio frequency (RF) links, local area networks (LANs), Intranets and the like.

The network 101 may be a single network or a plurality of networks of the same or different types. For example, the network 101 may include the local telephone network of a Local Exchange Carrier in connection with the long distance network of an Interchange Carrier (such as the AT&T long distance telephone network). Furthermore, the network may be a data network such as Frame Relay (FR) network, Asynchronous Mode Transfer (ATM) network, or Internet Protocol (IP) network. Any combination of telecommunications and data networks may be used with departing from the spirit and scope of the present invention. For the purposes of discussion, it will be assumed that the network 101 includes two or more data networks.

In this embodiment, each device has its own QOS mapping entity 114. If terminal 102, 104 requests standardized application/middleware QOS on end-to-end basis, the request must include a translation of what transport/network/link layer QOS parameters to use. Accordingly, the QOS mapping entity 114 will translate the application/middleware layer QOS into the corresponding network layer QOS 101 that is available in the lower layer. It may also be mentioned that terminal 102, 104 may also query the network-based application/middleware signaling entity 111 to find out what QOS classes are available in the network 101 along with appropriate pricing criteria so that a desired QOS can be requested.

As described above, the QOS requested by a terminal 102, 104 at the application/middleware layer, may not have a directly corresponding QOS at the transport/network/link layer. Accordingly, the QOS mapping entity 114 can transform, or map, the requested QOS from the application/middleware layer of the terminals 102 and 104 into the transport/network/link layer QOS (and vice versa) that will be required for the communications.

A terminal 102, 104 can request the available network/link layer QOS services or criteria (e.g., RSVP/DiffServ/MPLS for the IP network, CBR/rt-VBR/nrt-VBR/ABR/UBR for the ATM network) from the network-based application/middleware layer entity like gatekeeper 111. The gatekeeper 111 will then map the application/middleware layer QOS to the corresponding network/link layer QOS services via the mapping entity 114. The backend server that is communicating with the network/layer devices (e.g., routers in the case of the IP network, switches in the case of ATM network) will use this mapped network/link layer QOS to determine the available QOS services within the network (e.g., IP, ATM). The server can also then determine the cost associated with each kind of QOS service. This information (e.g., QOS, cost) is then sent back to the terminal 102, 104 so that the end user can determine what kind of QOS to request based on the trade-offs of the cost-QOS criteria.

If the network 101 is available or able to establish a communication at the requested QOS, and the terminal accepts any conditions of the network 101, i.e., cost, then a connection can be established between the terminals 102 and 104 across the network 101.

In this manner, a communication having a requested QOS can be established between two or more terminals 102 and 104. As described above, the QOS requested by the terminals 102, 104 does not have to directly correspond to the networks 101's definitions of QOS, since the QOS mapping device 114 can translate between the application/middleware layer QOS and the network layer QOS.

As described above, the QOS mapping entity 114 residing in each device (e.g., terminal, gatekeeper, etc.) can be used to determine or monitor a single network or a plurality of networks for communication requests from terminals 102 and 104. The communication request can include a request from an end-user for QOS classes of service at the application/middleware layer. By using such a mapping entity, the requested QOS services are defined at the application/middleware layer and can be standardized for all end-users. This can be particularly useful because the QOS requested by the application/middleware layer via the terminals 102 or 104 may not be understandable by or necessarily defined at the network/link layer by the various network/link layer QOS protocols.

As an example of operation, assume that the calling terminal 102 wishes to conduct a communication with called terminal 104. If it is assumed that the network-based gatekeeper 111 has the knowledge of the network/link layer QOS (via its backend entity that communicates with the network/link layer entities routers/switches), the application/middleware of the terminals can send the query on behalf of the end users to the gatekeeper to learn what kinds of QOS services are available. The gatekeeper would then send the reply back to the terminals 102, 104. The request for communication can be generated by software operating on the calling terminal 102. Further, the request for communication can include a communication information portion and a requested QOS portion.

The communication information portion can include any information necessary to complete the communication between the calling terminal 102 and the called terminal 104. For example, the communication information portion can include the terminal ID of both the calling and called terminals 102, 104, respectively. Further, the communication information portion can include billing information, such as the calling terminal's account number and the calling terminal's billing address.

The requested QOS portion of the communication request can include an indication of the QOS with which the calling terminal 102 desires to conduct the communication. Further, as described above, the requested QOS can be any indication of QOS that is specific to the end-user terminal 102, 104 or the application/middleware layer. For example, the terminals 102,104 may request a high, medium or low quality video service and a high, medium or low quality audio service using some performance parameters in accordance to the QOS services classes.

As described above, all application/middlware entities (e.g., terminals, gatekeepers) will have the QOS mapping entity 114 functions and the gatekeeper 111 that has the knowledge of the QOS services available over the network (e.g., OSI Layer 3 network like IP network, OSI Layer 2 network like ATM network) to establish a communication having the requested QOS service. In another scenario, the terminals 102, 104 can also directly communicate among themselves without using the gatekeeper 111 while the mapping of the application/middleware QOS to the network layer QOS (and vice versa) is done via the mapping entity 114. To accomplish this, the QOS mapping entity 114 can receive the communication request from the end-user and then the network/link layer devices (e.g., routers, switches) determine a communication path via the network or networks that would satisfy the request. In other words, based on the communication request, the QOS mapping entity 114 can transform the requested QOS into various network QOS services. Once a communication path is determined by the network/link layer devices, the QOS mapping entity 114 can transform the requested QOS into a network QOS and the network/link layer devices query the respective networks of the communication path to determine if the networks can satisfy the communication request at the QOS level requested by the terminals 102, 104.

If the network/link layer entities (e.g., routers, switches) devices determine that the communication request can be satisfied, and there is sufficient network capacity having the transformation from the mapping entity 114, then the network/link layer entities respond back to the appropriate application/middleware entities (e.g., terminals, gatekeepers) that the desired QOS is available.

If the various networks cannot satisfy the request, then the network/link layer entities, having the translated information of the QOS from the mapping entity, can alternatively query other combinations of networks in an attempt to satisfy the communication request. These further acts might include determining whether an alternative path exists, transforming the requested QOS services to correspond with the parameters of a network QOS or querying other networks for any other alternatives.

The gatekeeper 111 equipped with the QOS mapping entity 114 and backend server can also be configured to perform additional services. For example, the gatekeeper 111 can notify the terminals of available bandwidth on network 101, or various upgrades and downgrades to the requested QOS services that a terminal 102, 104 may be interested in utilizing. The gatekeeper 111 equipped with the QOS mapping entity 114 and backend server can also provide the terminals 102, 104 with additional information, such as cost/time comparison for a specific connection. For example, the gatekeeper 111 can inform the terminals 102, 104 that a communication having a medium quality of service level will receive a rate of 10¢/minute, while the same communication having a high quality of service level will receive a rate of $1.00/minute.

The QOS mapping entity 114 is a logical function and can reside within the terminals, gatekeepers, etc. It may also be possible to envision that a QOS mapping entity 114 may be realized as a separate entity physically. However, the logical functions still remain the same as described whether these entities reside within the terminals or gatekeepers, or it may be distributed throughout the communications network. For example, the QOS monitoring device 114 may be made pan of the various central offices, routers or servers employed by the networks 101 which are distributed throughout the networks 101. Any configurations that provide for the monitoring of communications placed over the network 101 may be used without departing from the spirit and scope of the present invention. The monitoring of the network/link layer QOS can be reported back to the application/middleware layer QOS to correlate on end-to-end basis after appropriate transformation by the QOS mapping entity.

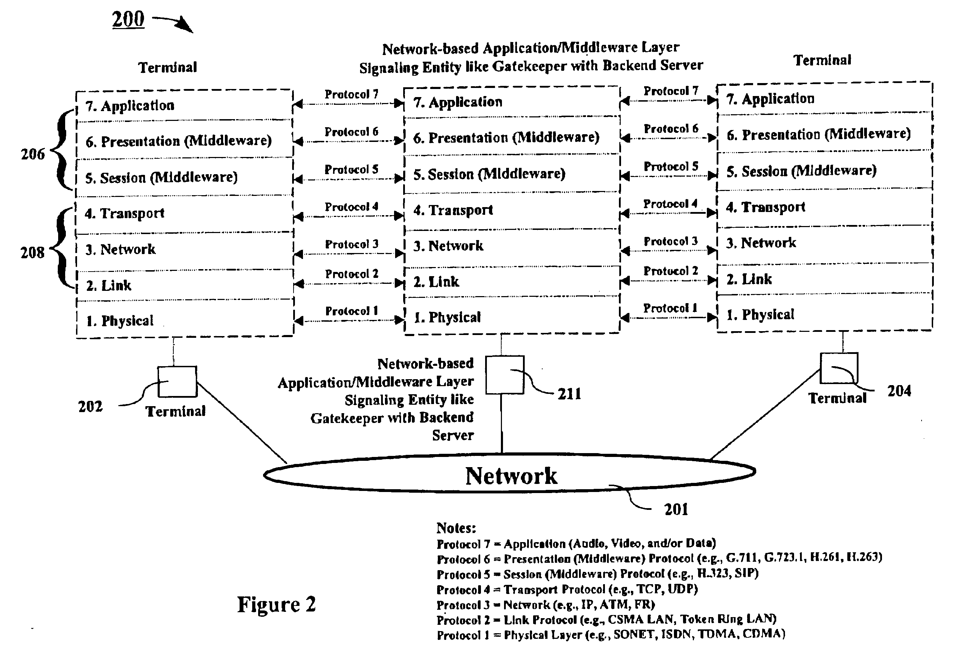

Fig. 2 shows the logical OSI layer for each entity (e.g., terminal, gatekeeper). Although each entity may have all 7 layers of communications protocols, each protocol layer can only be communicating within its boundary. For example, if a terminal 202, 204 uses H.323 communication protocol, it will only know the H.323 layer protocol that covers layers 7/6/5. It may be noted that layer 7, 6, and 5 may constitute only one layer combining among themselves as "middleware" 206. In this case, the terminal 202, 204 and gatekeeper 211 will communicate among themselves as the application/middleware 206 entities. On the contrary, routers (not shown in this figure) will communicate through OSI layer 3 (i.e., IP layer). However, terminal 202, 204 or gatekeeper 211 will be connected to the router, and therefore, needs to have an interface that can communicate using the IP protocol. In other words, terminals 202, 204 or gatekeepers 211 are not aware of the lower layer functions to the extent that they need to have the intelligence to manage or control the resources of those layers. Rather, terminals 202, 204 or gatekeepers 211 will only manage or control the resources of the application/middleware layer 206. Fig. 2 shows how the communications take place among the communication entities. However, the transport/network/link layer entities 208 like routers/switches are not shown. In the case of the router, it may contain communicate over layers 3, 2, and 1, while the ATM switches will communicate over layers 2 and 1.

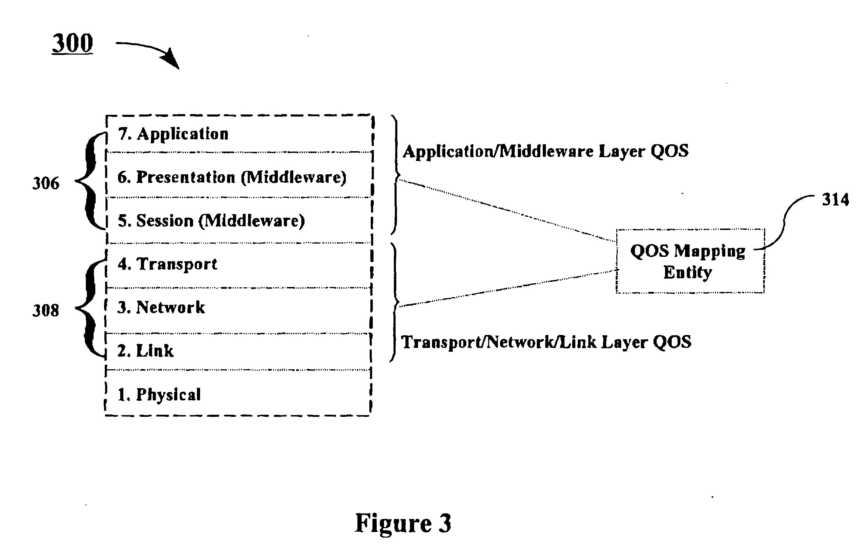

Fig. 3 shows an exemplary logical conception of the QOS mapping entity 314. This intelligent QOS mapping entity 314 can map the application/middleware (OSI Layer 7/6/5) QOS 306 to the transport/network/link layer (OSI Layer 4/3/2) QOS 308 (and vice versa). The QOS mapping entity 314 can reside within application layer entities like terminals, gatekeepers, etc. As mentioned before, the application layer QOS may be lumped into middleware QOS or it may be application layer QOS. In either case, it is designated as application/middleware QOS. In transport layer (OSI Layer 4), there is no direct concept of QOS like application or network/link layers. Instead, the transport layer transfers QOS information from the upper layer to the lower layer (and vice versa). However, the network QOS in each network has distinct features. For example, in an IP network, there can be different kinds of QOS services: RSVP, DiffServ, and MPLS. Furthermore, there can also be distinct QOS services in the link layer, such as an ATM network, which is considered a link (OSI Layer 2) layer network. It has also different kinds of QOS services, such as CBR, rt-VBR, nrt-VBR, ABR, and UBR. The main purpose of the QOS entity 314 is to map the QOS between the layers (i.e., application/middleware QOS to transport/network/link layer QOS and vice versa).

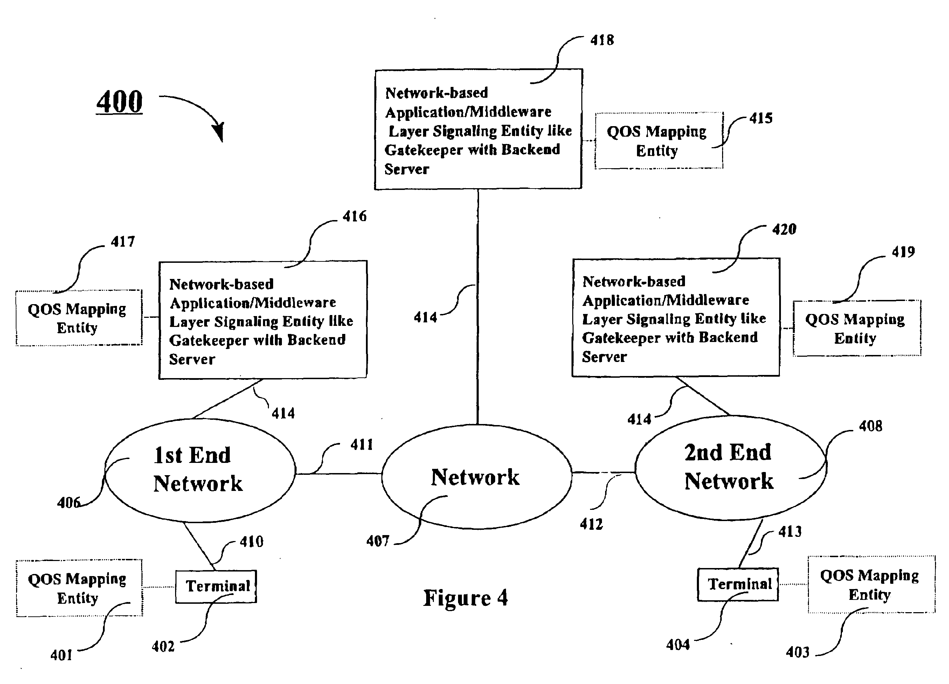

Fig. 4 is an exemplary diagram of an alternative QOS system 400. As shown in Fig. 4, the system 400 includes terminals 402 and terminal 404. Terminal 402 is connected to a first end network 406 via a communication link 410. Terminal 404 is connected to a second end network 408 via communication link 413.

The first and second end networks are connected via communication links 411 and 412, respectively, to a network 407. Each of the networks 406-408 are additionally connected to an application layer entity like gatekeeper with backend server 418 with QOS mapping entity 415 via communication link 414. The terminals will also have the QOS mapping entities 401, 403. The terminals 402 and 404, communication links 410-414 and networks 406-408 can be any of the entities previously discussed with respect to the embodiment of the invention described in Fig. 1.

As shown in Fig. 3, the QOS mapping entities 401, 403, 415 will remain with each application/middleware layer entity. However, it is also possible to have the QOS mapping entity 314 as a stand-alone entity separated from the application layer entity, like a terminal or gatekeeper. In this embodiment, the logical communications remain as previously discussed. Similar to Fig. 1, the network/link layer entities (like routers/switches equipped with QOS mapping entity 415) can monitor networks 406-408 in order to search for any communication request from the end-users at terminals 402 and 404. As described above, the communication request can be in the form of a request to establish a communication path between two or more terminals 402, 404 and provide specific QOS level for the communication.

However, at the network layer each network 406-408 can have non-standardized QOS services between the application/middleware and transport/network/link layer defined by various parameters. Accordingly, the QOS mapping entities can allow the end-users at terminal 402 and 404 to utilize a standardized QOS application that will automatically map the various QOS services and parameters in each networks 406-408 to the standardized application/middleware.

As an example of operation, when the application/middleware layer entities like terminals 402, 404 and gatekeeper 418 equipped with QOS mapping entities 401, 403, 415 receive communication requests from an end-user at a calling terminal 402 to communicate with an end-user at a called terminal 404, the application/middleware entity can determine the identification of the calling terminal 402 and the receiving terminal 404 by using the communication information portion. Furthermore, the QOS mapping entity 401 receives the requested QOS portion of the communication request by the end-user at terminal 402 and the network/link layer entity, like a router or the switch, knowing the network/link layer QOS determines an ideal communication path throughout networks 406-408 in order to establish a link to satisfy the specific QOS request. Because networks 406-408 are utilizing different parameters to provide QOS, the QOS mapping entity 401 residing in the application/middleware entity will map the standardized QOS services at the application layer requested by the end-user at terminal 402 in order to equate the QOS parameters of networks 406-408. The same network/link layer QOS information is passed to the network/link layer QOS entity.

The QOS mapping entity 401 performs this function in a transparent manner to the terminals 402, 404 or the gatekeeper 418. Furthermore, the terminal or the gatekeeper equipped with the QOS mapping entity 415 can query networks 406-408 to determine if each network can provide the QOS request that has been sent by the end-user at terminal 402 with the help of the network/link layer entity like the router/switch. If the network/link layer entity with the help of the QOS mapping entity 415 of the application/middleware entity determines that the requested QOS service is not available, then it can query the networks for other QOS possibilities or alternatives in order to provide similar QOS. If the network/link layer entity with the help of the network/link layer QOS mapping entity 415, determines that it is possible to satisfy the request from the end-user at terminal 402 based on the QOS information received from each network 406-408, then it will inform the calling terminal 402 of the availability and assist the end-users at terminals 402 and 404 in establishing a communication. The network/link layer entity with the help of the QOS mapping entity 415 of the application/middleware can additionally provide the end-users with the terms of availability and cost/time information in a similar manner to that discussed in the first embodiment.

When a communication is requested between terminals, the each mapping entity of each device (e.g., terminal, gatekeeper) translates the application/middleware layer QOS to the appropriate network/link layer QOS, and the network/link layer routers/switches determine whether the desired QOS can be supported across the network between any source-destination path.

In order to map a requested quality of service to a network layer quality of service, the mapping entity 415 will determine a proper mapping between application/middleware layer QOS and a particular network/link layer QOS. Once the mapping entity 415 has determined the proper transformed network/link layer QOS, the network/link layer entity like router/switch can then query any of the networks in the communication path to determine if the networks are capable of providing the communication path at the requested QOS either with the help of the backend server of the gatekeeper or directly working between the routers/switches. Once the network/link layer entity like router/switch has determined that the networks are capable of establishing a communication between the calling and called terminal at a requested QOS, the router/switch can inform the terminal of the communication path's availability. Accordingly, the terminals may accept or decline the communication. If the terminals accept the communication, a controller can establish a communication between the terminals.

In the preferred embodiment of the claimed invention, the QOS mapping system provides a way for mapping H.323 QOS over packet-based networks. The mapping allows the transport independent H.323 application to offer an application layer QOS across any number of networks. The application layer QOS is available across all networks, regardless of whether the end-users are connected to the same or different network types.

The H.323 application has a finite set of QOS classes that can be requested by a terminal. This finite set of H.323 QOS classes remains relatively stable because the QOS classes are based on the fundamental traffic characteristics originated from the audio codec, video codec and data signaling/applications of H.323. The QOS parameters of these traffic sources originated from the end-users H.323 real-time multiple media application are the fundamental bases of the H.323 QOS. Accordingly, an embodiment of the invention can provide a framework on how the application level H.323 QOS classes can be mapped over specific network layer QOS defined by packet-based networks, such as IP and ATM. Further, an end-user can request any desired H.323 QOS class while considering the cost-performance trade off, and subsequently negotiate the end-to-end QOS.

As discussed earlier, each network potentially utilizes different parameters to satisfy a particular QOS service request. In addition, data packets of a single communication may traverse many different types of networks in route to a destination. Therefore, there is increased difficulty in specifying QOS classes with a standard set of network parameters. Furthermore, data packets passing through different networks experience different qualities of transmission. For example, at any given time, one of the networks can have a delay, bit-rate, error rate or the like different from another one of the networks. The overall effect of data packets being exposed to differing network characteristics is to render the quality of service unpredictable. Accordingly, various networks have attempted to provide QOS using protocols and programs that use different parameters including RSVP, IntServ, DIFFSERV, MPLS, ATM and the like.

Resource reservation protocol (RSVP) is a signaling protocol for applications to reserve resources. In other words, RSVP is a QOS signaling protocol that requests the reservation of resources. These requests dictate the level of resources (e.g., bandwidth, buffer space) that must be reserved along with the transmission scheduling behavior. The transmission scheduling behavior must be installed in the network layer devices (i.e., routers) to provide the desired end-to-end QOS commitment for the data flow. The QOS can be provided on a per-flow basis according to requests from the end-user. RSVP attempts to offer a "guaranteed" or "controlled" service to the network. The guaranteed service is for real-time applications that cannot be delayed. This service attempts to deliver a practicable, constant stream of network capacity that is as close as possible to the end-to-end network delay. The controlled service tries to deliver end-to-end network capacity as close as possible to the condition of an unloaded network. In RSVP, traffic can be characterized by peak rate of flow (bytes per second, bits per second), maximum datagram size/maximum burst size (bytes, bits), token bucket rate/service rate/bandwidth (bps), slack term/delay (milliseconds), variation in delay and other parameters. It may be noted that packet losses or bits errors are not taken into account by RSVP specifications.

The Integrated Services (IntServ) model uses the RSVP as the signaling protocol to provide two service classes in addition to the best effort service. IntServ also uses the admission control routine, classifier and packet scheduler.

Differentiated Services (DIFFSERV) is a response to the scaleability and deployment obstacles posed by end-to-end reservations across wide-area links using the Integrated/RSVP services. DIFFSERV attempts to eliminate the need for RSVP reservation across a wide area network (WAN). DIFFSERV assumes that some capacity in the network has been set aside ahead of time for each particular class of traffic. Accordingly, it is some what like a reservation. However, instead of have each device determine the session to which a DIFFSERV packet belongs, DIFFSERV marks the IP type of service field so that intermediate notes can classify on a packet by packet rather than by session-by-session basis. If the capacity of the network is not set aside or prioritized, the dynamic signaling protocol (i.e., RSVP) needs to be used to request services on demand.

Some mandatory values of the of the DIFFSERV code points, and their associated per-hop behaviors (PHB) are outlined in standards. Shaping primitives tell a device how to move a traffic flow to within a given profile through the use of queues, rate controllers and other parameters. Many services can be provided, such as premium service, assured service and olympic service. Premium service for applications require low-delay and low jitter service. Assured service for applications required better reliability than best-effort service. Olympic service provides three tiers of services called gold, silver and bronze. DIFFSERV defines only the DIFFSERV fields and PHBs. Olympic service uses the tiers of services with decreasing quality and can be based on specific values of the QOS parameters of a given service class. For example, if we consider the delay parameter, gold end-to-end delay (EED) would be 100 milliseconds, silver EED would be 150 milliseconds and bronze EED would be greater than 150 milliseconds.

Multi-protocol label switching (MPLS) inserts a fixed-length label ahead of the variable length IP address. Furthermore, it functions as a label for a selected route. The header is generated based on IP route information in a similar fashion as a network protocol. However, MPLS contains a 3-bit field known as class-of-service (COS) in its 32-bit label information to provide QOS information.

An ATM network defines a set of pre-defined QOS service categories which also defines a set of traffic attributes or parameters. These parameters include constant bit rate, real time-variable bit rate, non-real time-variable bit rate, available bit rate and unspecified bit rate. Common ATM QOS parameters include;
Peak Cell Rate (PCR) which is the maximum cells per second required to deliver the user data;
Minimum Cell Rate (MCR) which is the minimum acceptable cell rate that the ATM network must provide or else the circuit request is rejected;
Cell Transfer Delay (CTD) which is the acceptable delay;
Cell Loss Ratio (CLR) which is the cell loss that is acceptable;
Cell Error Ratio (CER) which is the cell error rate that is acceptable;
Sustainable Cell Rate (SCR) which is an upper bound on the conforming average rate of an ATM connection over time scales; and

Cell Delay Variation which a component of CTD, induced by buffering and cell scheduling.

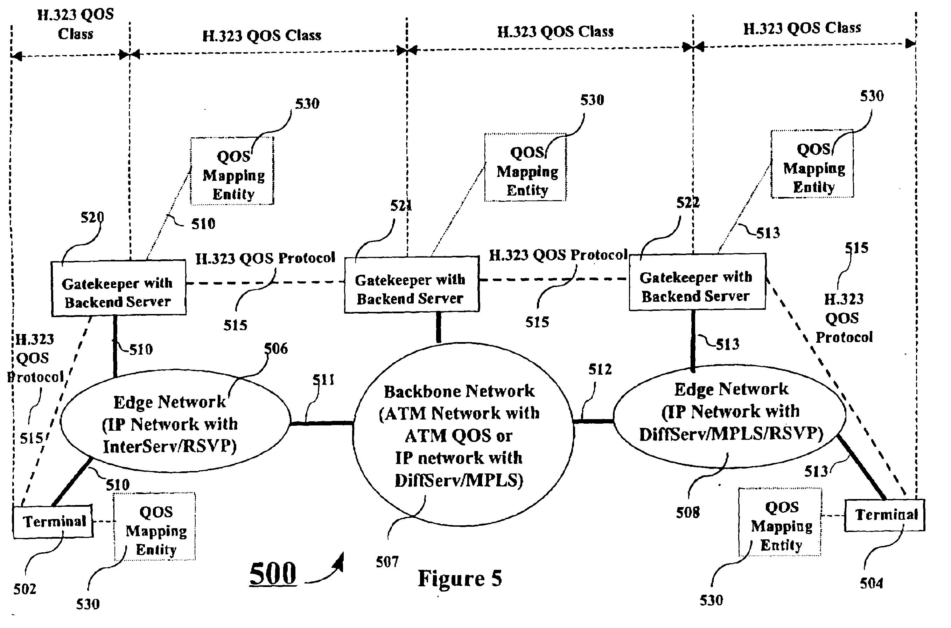

Fig. 5 is an exemplary block diagram of an embodiment of the present invention using the H.323 standard. Although the communication system in Fig. 5 employs three different networks 506-508 offering different kinds of network layer QOS services, any number of networks could be employed. The H.323 QOS protocol 515 is the common entity at the application layer on an end-to-end basis. Terminals 502, 504 and gatekeepers/backends (GK/BE) 520-522 throughout each network communicate via communication links 510-513 using the H.323 QOS protocol. The terminals, networks and communication links could be any of the entities discussed in previous embodiments. The GKs/BEs could be any device performing terminal and gateway registration, address resolution, bandwidth control, admission control and any other administrative function.

A request for QOS is negotiated on the basis of the H.323 QOS classes that are mapped to equate to QOS services in each network so that the various QOS service parameters at the network layer will not cause confusion. In this particular situation, the application layer H.323 QOS provides the common basis for translation on an end-to-end basis. Accordingly, both application and network layer QOS classes can be classified independently, as required, without changing the H.323 application software each time a definition or a protocol of a network level QOS class is changed.

The terminals 502, 504 permit the end-user to order specific kinds of network layer QOS services. In this embodiment of the invention, the end-user utilizes terminal 502 to communicate via a communication link 510 with a GK/BE 520 using the H.323 QOS application and protocol 515. The GK/BE 520 is connected to terminal 502 through links 510 (and network 506) on one side and connected to a QOS mapping device 530 via link 534 on the other side. The QOS mapping device 530 communicates with network 506 via link 510 and operates to transform, or map, the requested QOS so that there can be a logical association of the set of QOS values between networks 506-508. Furthermore, each network communicates with the other networks through communication links 511 and 512 disposed between each GK/BE 520-522. The foundation for each logical association is the H.323 QOS class of services between each end-user controlled by the H.323 QOS protocol at the applications layer.

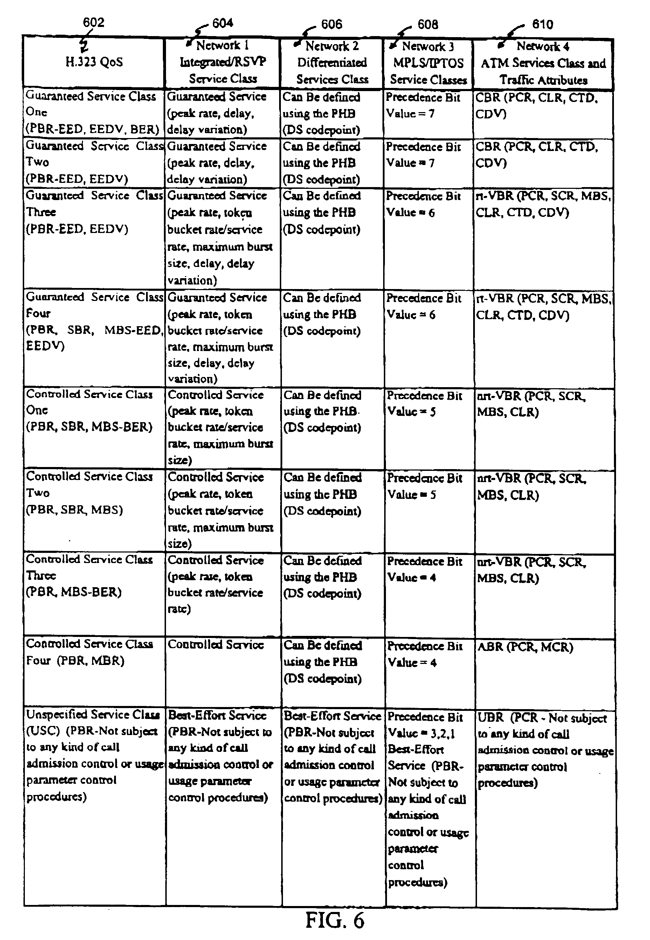

Fig. 6 shows an exemplary data structure of memory that provides a mapping scheme that will allow end-user terminals to utilize H.323 QOS classes that are transparent to the various differences in the various QOS parameters at the network layer. As shown, each network and its respective QOS service class is mapped to a similar H.323 service class where parameters from each service class are matched to create the mapping tool. For example, field 602 includes the H.323 QOS levels, such as guaranteed service class, controlled service class and unspecified service class. Field 604 includes Integrated/RSVP service classes for the network layer that correspond to the H.323 QOS service classes in field 602. In a similar manner, fields 606, 608 and 610 include the corresponding network layer QOS for the differentiated service class, MPLS/IPTOS and ATM service classes.

Although, as shown in Fig. 5, the mapping application in this embodiment of the invention resides in QOS mapping entity 530, the mapping application could potentially reside in the GK/BE 520-522 or any other entity discussed in the first embodiment. Furthermore, the mapping application could be centrally located so that software updates could be easily performed.

Based on Fig. 5, an example of the operation using the embodiment will now be described using the H.323 Service Class standards with Network 506 utilizing IntServ/RSVP Service Classes for QOS. The H.323 Guaranteed Service Class One delivers QOS using parameters such as PBR, EED, EEDV and BER. Network 506 using IntServ/RSVP Service Classes offers Guaranteed Service QOS using parameters such as peak rate, delay and delay variation. If an end-user desires to order a specific H.323 QOS classes such as Guaranteed Service Class One, the end-user utilizes the H.323 software application on the terminal 502 located at the application layer. Initially, the end-user at terminal 502 utilizing the H.323 software application will communicate a request via a communication link 510 with the GK/BE 520 and QOS mapping device 530 using the H.323 protocol 515. The QOS mapping entity 530 monitors its respective network 506 in order to search for communication requests for QOS services from terminal 502, or any other terminal on the network. Once the QOS mapping entity 530 receives a request from terminal 502, it determines the identification of the calling and receiving terminals.

If the QOS mapping entity 530 can satisfy the QOS request, then it notifies the end-users at terminals 502 and 504, and establishes to communication link. If the QOS mapping entity that receives the request cannot satisfy the request, then it searches for alternative paths or QOS possibilities, and promptly notifies the end-users. When the QOS mapping entity 530 performs this function, it may communicate with other QOS mapping entities to search for available bandwidth or QOS services. The QOS mapping entities 530 can also perform the administrative functions previously discussed. The QOS mapping entity 530 transparently performs the mapping function by equating the parameters of Network 506 QOS classes (IntServ/RSVP) with that of the H.323 standards using memory. The QOS mapping entity 530 operates to apply the mapping function so that there can be a logical association of one set of QOS values in network 506 with the set of QOS values in networks 507, 508 or any other network.

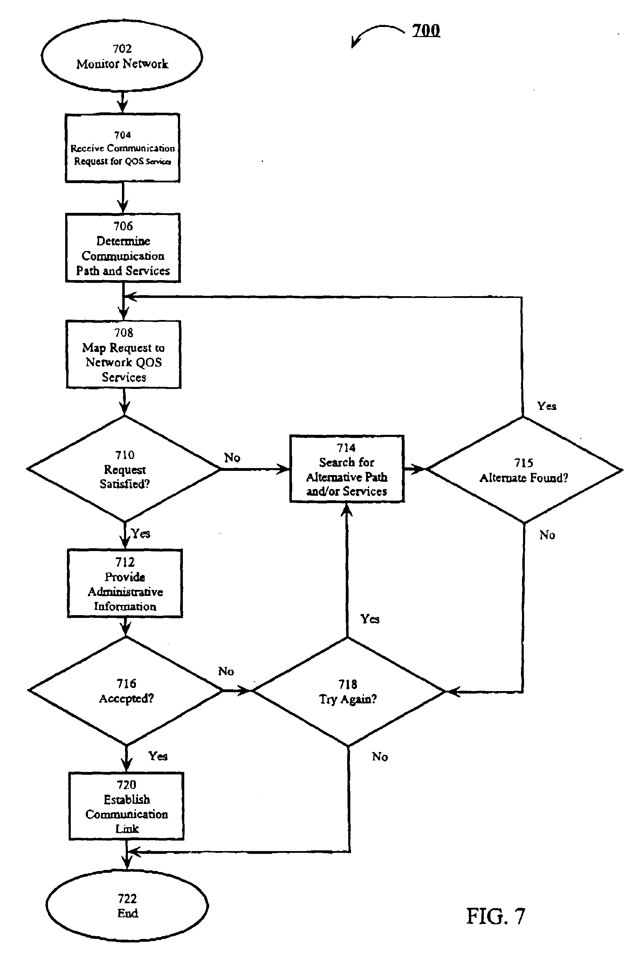

Fig. 7 is a flowchart of an exemplary process for mapping end-to-end application layer QOS across networks. In step 702, the QOS mapping entity monitors the network for communication requests from an end-user at a terminal.

In step 704, the QOS mapping entity receives a communication request for QOS services from an end-user. The communication request can contain a QOS request which indicates a QOS level that the end-user wishes to establish a communication. The process then proceeds to step 706.

In step 706, based on the communication request, the QOS mapping entity determines a communication path and the requested QOS classes. The communication path can include one or more networks, each of the networks using a different definition or protocol to define and implement QOS. The process then proceeds to step 708.

In step 708, the QOS mapping entity maps the requested QOS classes and into corresponding network QOS classes. In step 710, the QOS mapping entity determines whether the QOS request from the end-user can be satisfied by available network resources. As described above, this can be accomplished by querying the networks base on the corresponding network QOS classes determined in step 708. If the request can be satisfied by the QOS mapping entity, then it provides administrative information at step 712, such as costs/time comparisons, to the end-user.

In step 716, the end-user can be queried to accept the QOS classes the are provided by the QOS mapping entity. If the end-user accepts the QOS classes provided, then the QOS mapping entity establishes a communication link between the calling party and the receiving party at step 720. The process then proceeds to step 722 where the process ends.

At step 710, if the QOS request cannot be satisfied, then the QOS mapping entity proceeds to step 714. In step 714, the QOS mapping entity searches other resources to determine if it can provide alternate communication paths and/or services.

In step 715, the QOS mapping entity determines whether alternate paths and/or services were found. If the QOS mapping entity finds alternative paths and/or services, then it repeats step 708 and maps the standardized application layer QOS classes to the network layer QOS classes.

If the QOS mapping entity does not find alternative communication paths and/or services, then it communicates this result to the calling terminal and proceeds to step 718 where the end-user is asked to request another QOS request. If the end-user does not wish to try again, then the QOS mapping entity proceeds to step 722 where the session ends.

At step 716, if the end-user does not accept the QOS classes provided by the QOS mapping entity, then the QOS mapping entity will ask the end-user at step 718 whether he wants to try another request for QOS.

If the end-user does not want to try another attempt, then the session ends at step 722.

If the end-user desires to try another QOS request, the QOS mapping entity proceeds to step 714 and searches for alternative paths and/or services. The process then continues on as discussed earlier.

As shown in Fig. 3, the method of this invention is preferably implemented by a QOS mapping entity 314. However, the QOS mapping entity 314 can be implemented as a part of each application/middleware (e.g., terminal, gatekeeper) can also be implemented as part of a separate stand-alone entity, on a general purpose or a special purpose computer, a programmed microprocessor or microcontroller and peripheral integrated circuit elements, an Application Specific Integrated Circuit (ASIC), or other integrated, a hardware electronic or logic circuit such as a discrete element circuit, a programmable logic device such as a PLD, PLA, FPGA, or PAL, or the like, but the logical communications will still remain the same as described earlier. In general, any entity on which exists a finite state machine capable of implementing the flowcharts shown in Fig. 7 can be used to implement the usage QOS mapping functions of this invention.

While this invention has been described in conjunction with the specific embodiments thereof, it is evident that many alternatives, modifications, and variations will be apparent to those skilled in the art. Accordingly, preferred embodiments of the invention as set forth herein are intended to be illustrative, not limiting. There are changes that may be made without departing from the spirit and scope of the invention.

## Claims

1. A method for establishing a communication over at least one network, comprising:
receiving a request to establish a communication between two or more terminals, the communication request including at least a requested quality of service;
transforming the requested quality of service into a corresponding network quality of service that is recognizable by a network layer, and
establishing a communication between the two or more terminal over the at least one network based on the corresponding network quality of service.

2. The method according the claim 1, wherein the request to establish a communication includes at least an identification of the two or more terminal and account information for at least one of the two or more terminals.

3. The method according to claim 1, wherein the request is recognized at an application/middle layer and causes the application/middle layer to establish a communication between the two or more terminals.

4. The method according to claim 1, wherein the two or more terminals are H.323 terminals.

5. The method according to claim 1, wherein the request to establish a communication is entered by a subscriber at at least one of the two or more terminals.

6. The method according to claim 1, wherein the two or more terminals can request a network link layer quality of service from a network based application/middle layer entity.

7. The method according to claim 1, wherein the requested quality of service includes at least a guaranteed service class, a controlled service class, and an unspecified service class.

8. The method according to claim 1, wherein the requested quality of service includes at least a high, medium and low quality of service.

9. The method according to claim 1, wherein the requested quality of service includes at least a requested available bandwidth.

10. The method according to claim 1, wherein the requested quality of service includes a request for at least one of a video quality of service, audio quality of service and data quality of service.

11. The method according to claim 1, wherein the corresponding quality of service is a quality of service that is recognized by the network layer.

12. The method according to claim 11, wherein the network layer includes at least one of an IP network, an ATM network and a frame relay network.

13. The method according to claim 1, wherein the network layer includes a transport/network/link layer.

14. The method according to claim 13, wherein the transport/network/link layer includes the corresponding quality of service that the requested quality of service of the application/middle layer is transformed into.

15. The method according to claim 1, further comprising:
transmitting at least one of a communication cost and a communication availability to a terminal requesting to establish the communication.

16. The method according to claim 15, wherein the communication cost is a cost of establishing the communication at the requested quality of service.

17. The method according to claim 15, wherein the communication availability is a listing of alternative available communication options at various quality of service levels.

18. A method for establishing a communication over at least one network, comprising:
receiving a requested quality of service;
transforming the requested quality of service into a network quality of service; and
establishing a connection having the requested quality of service over at least one network based on the network quality of service.

19. The method according the claim 18, wherein the requested quality of service includes at least an identification of a terminal requesting a communication and account information.

20. The method according to claim 18, wherein the requested quality of service is recognized at an application/middle layer and causes the application/middle layer to establish a communication between two or more terminals.

21. The method according to claim 20, wherein the two or more terminals are H.323 terminals.

22. The method according to claim 18, wherein the requested quality of service is entered by a subscriber at at least one terminal.

23. The method according to claim 18, wherein two or more terminals can request a network link layer quality of service from a network based application/middle layer entity.

24. The method according to claim 18, wherein the requested quality of service includes a request for at least a guaranteed service class, a controlled service class, and an unspecified service class.

25. The method according to claim 18, wherein the requested quality of service includes at least a high, medium and low quality of service.

26. The method according to claim 18, wherein the requested quality of service includes at least a requested available bandwidth.

27. The method according to claim 18, wherein the requested the quality of service includes at least one of a video quality of service, audio quality of service and data quality of service.

28. The method according to claim 18, wherein the at least one network includes at least one of an IP network, ATM network and a frame relay network.

29. The method according to claim 18, wherein the at least one network includes a transport/network/link layer.

30. The method according to claim 29, wherein the transport/network/link layer includes the corresponding quality of service that the requested quality of service of the application/middle layer is transformed into.

31. The method according to claim 18, further comprising:
transmitting at least one of a communication cost and a communication availability to a terminal requesting to establish the communication.

32. The method according to claim 31, wherein the communication cost is a cost of establishing the communication at the requested quality of service.

33. The method according to claim 31, wherein the communication availability is a listing of alternative available communication options at various quality of service levels.
